# EUROPÄISCHE PATENTSCHRIFT

(11) **EP 1 645 180 B1**
(45) Veröffentlichungstag und Bekanntmachung des Hinweises auf die Patenterteilung: **28.05.2014**
(21) Anmeldenummer: 05018044.7
(22) Anmeldetag: 19.08.2005
(51) Int. Cl.: A01G 9/04

(54) **Blumenkasten mit Untersetzer, insbesondere aus Kunststoff**
Planter box with saucer, especially in plastic
Jardinière avec soucoupe, notamment en plastique

(30) Priorität: 06.10.2004 DE 202004015494 U
(43) Veröffentlichungstag der Anmeldung: 12.04.2006
(73) Patentinhaber: Geli GmbH, 63755 Alzenau-Michelbach (DE)
(72) Erfinder: Lippert, Thomas, 63755 Alzenau (DE)
(74) Vertreter: Schubert, Siegmar

(56) Entgegenhaltungen:
- EP-A- 1 198 984
- FR-A- 2 568 446
- FR-A- 2 753 340
- US-A- 4 442 629
- US-A- 5 644 867

## Beschreibung

Die Erfindung betrifft einen Blumenkasten mit Untersetzer, insbesondere aus Kunststoff, und mit mindestens einem leistenförmigen Blumenkastenhalter nach dem Oberbegriff des Anspruchs 1.

Es ist ein Blumenkasten mit Untersetzer bekannt, wobei der Blumenkasten lose in den Untersetzer eingesetzt werden kann und nur durch dessen umlaufenden erhöhten Randbereich gehalten wird. Außerdem können aus einem Boden des Blumenkastens hohle Überlaufdome und aus einem Boden des Untersetzers Formelemente als Fußelemente ausgeformt sein (Broschüre der Anmelderin "Gartenprodukte" 2004). Die annähernd quaderförmigen hohlen Formelemente in dem Boden des Untersetzers sind oben offen und unten geschlossen. Im einzelnen sind drei solcher Formelemente im Abstand zueinander am Boden des Blumenkastens nahe der Vorderseite und drei weitere nahe der Rückseite des Untersetzers symmetrisch zu einer Längsachse und zu einer Querachse angeordnet. - Zur Anbringung des Blumenkastens neben einer Wand, insbesondere an einem Geländer oder dergleichen länglichen Element, sind leistenförmige Blumenkastenhalter bekannt (a.a.O.), deren erstes Teil einen Steg umfasst, von dem sich ein erster Endabschnitt und im Abstand zu diesem ein weiterer Abschnitt in Gebrauchstage nach oben weg erstrecken, wobei der weitere Abschnitt länger als der erste Endabschnitt ist. Der weitere Abschnitt ist an seinem von dem Steg entfernten Ende in Gebrauchslage waagerecht abgebogen. Das waagerechte Ende trägt ein zweites Teil mit einem waagerechten, einen Längsschlitz aufweisenden Abschnitt und einem von diesem nach unten abgebogenen Endabschnitt. Der erste Teil und der zweite Teil sind gegeneinander verschiebbar einstellbar und fixierbar, um ein Geländer oder dergleichen längliches Element zwischen sich aufzunehmen. Der Blumenkasten kann sich dann auf zwei solche im Abstand zueinander angeordnete Blumenkastenhalter abstützen, wobei die ersten Endabschnitte der leistenförmigen Blumenkastenhalter den Blumenkasten vorne umgreifen und halten. - Nachteilig ist, dass die ersten Endabschnitte außen vor dem Blumenkasten liegen, wo sie - auch optisch - stören können. - Dies gilt auch, wenn die Blumenkastenhalter den Blumenkasten nicht direkt halten, sondern einen in einen Untersetzer eingesetzten Blumenkasten.

Aus der FR-A-2 568 446 ist bereits ein Blumenkasten mit einem als Untersetzer ausgebildeten Wasserreservoir bekannt, der vier hohle Formelemente in dem Boden des Blumenkastens und vier hohle Formelemente in dem Boden des Untersetzers aufweist. Die hohlen Formelemente sind unten offene Erhebungen, die ineinander passen, um den Blumenkasten in dem Untersetzer lösbar aufzunehmen. Jeweils zwei der Erhebungen sind im Längsabstand zueinander angeordnet. Weiterhin können der Blumenkasten und der Untersetzer an einigen der unten offenen Erhebungen zusammengeclipst werden. Abschnitte der ineinander passenden, unten offenen Erhebungen verjüngen sich nach oben. Diese Abschnitte sind zumindest teilweise pyramidenstumpfförmig. Der Untersetzer weist unten keinen erhöhten Randbereich auf, wie er sonst für Untersetzer von Blumenkästen typisch ist. Der Blumenkasten mit Untersetzer umfasst keinen Blumenkastenhalter.

Der vorliegenden Erfindung liegt die Aufgabe zugrunde, einen Blumenkasten mit Untersetzer und mit mindestens einem leistenförmigen Blumenkastenhalter zu schaffen, der die weiter oben angegebenen Nachteile vermeidet. Insbesondere soll der Blumenkastens formschlüssig in dem Untersetzer unabhängig von dessen gegebenenfalls erhöhten Randbereich einsetzbar sein und eine weniger störende Halterung mit leistenförmigen Blumenkastenhaltern gestatten.

Diese Aufgabe wird für den Blumenkasten mit Untersetzer mit den Merkmalen des Anspruchs 1 gelöst. Demgemäß wird davon ausgegangen, dass die hohlen Formelemente in dem Boden des Blumenkastens und in dem Boden des Untersetzers als unten offene Erhebungen so geformt und angeordnet sind, dass sie paarweise ineinander passen. Unter "paarweise" wird je eine Erhebung in dem Boden des Blumenkastens sowie je eine Erhebung in dem Boden des Untersetzers verstanden. An den paarweise zusammengesetzten Erhebungen wird der Blumenkastens in dem Untersetzer zumindest formschlüssig exakt gehalten. Mit den unten offenen Erhebungen wird erreicht, dass die leistenförmigen Blumenkastenhalter mit ihrem abgewinkelten Endabschnitt nicht außen an dem Blumenkasten bzw. dem Untersetzer anzuliegen brauchen, um den Blumenkasten und den Untersetzer zu halten, sondern dass die Blumenkastenhalter verdeckt in die unten offenen Erhebungen eingreifen können. Damit werden der Blumenkasten und der Untersetzer sicher gehalten, ohne daß die ersten abgewinkelten Endabschnitte der Blumenkastenhalter vor den Vorderseiten des Untersetzers und des Blumenkastens vorstehen und stören können. Die zur Verbindung mit einem solchen Blumenkasten mit Untersetzer verwendeten leistenförmigen Blumenkastenhalter sind zwar ähnlich wie nach dem Stand der Technik geformt, wobei aber der Steg zwischen dem ersten Endabschnitt und dem weiteren Abschnitt kürzer ist als nach dem Stand der Technik, da in der erfindungsgemäßen Anordnung der Steg sich nur zwischen der vorderen, unten offenen Erhebung, in welche der erste Endabschnitt des Blumenkastenhalters hineinreicht, und dem weiteren Abschnitt des Blumenkastenhalters erstreckt, der nahe der Rückwand des Blumenkastens nach oben abgebogen ist. Wenn der Blumenkasten bzw. sein Untersetzer in die Blumenkastenhalter eingesetzt ist, befindet sich der Steg des Blumenkastenhalters unter dem Boden des Untersetzers, um diesen zu stützen. Gegen ein Abkippen nach vorn werden der Untersetzer und der gegebenenfalls in ihn eingesetzte Blumenkasten durch den jeweils ersten Endabschnitt der Blumenkastenhalter gesichert, der in die zugehörigen unten offenen, hohlen Erhebungen des Untersetzers und des Blumenkastens, die ineinander stecken, hineinreicht. Der jeweils weitere Abschnitt der Blumenkastenhalter befindet sich dann neben einer Außenfläche des Untersetzers und gegebenenfalls des Blumenkastens von der Vorderseite aus gesehen ebenfalls verdeckt. - Zu dem Blumenkastenhalter kann jeweils noch ein drittes Teil gehören, welches ähnlich dem zweiten Teil ausgebildet ist und längs verschiebbar unterhalb des Stegs an diesem einstellbar fixiert werden kann, um sich mit einem abgebogenen Ende an der Wand abzustützen, neben der der Blumenkasten gehalten wird.

Die leistenförmigen Blumenkastenhalter, die zu dessen Aufhängung dienen, sind getrennt handelbar. - Wesentlich ist, daß die unten offenen hohlen Erhebungen, die aus dem Blumenkasten und dem Untersetzer ausgeformt sind, von unten leicht zugänglich sind, um jeweils einen ersten abgewinkelten bzw. abgebogenen Endabschnitt von wenigstens zwei leistenförmigen Blumenkastenhaltern aufzunehmen, wie weiter in Anspruch 1 definiert. Indem der Blumenkasten und der Untersetzer an den unten offenen Erhebungen nicht nur formschlüssig zusammensetzbar sind, sondern darüber hinaus kraftschlüssig zusammenclipsbar sind, siehe Anspruch 2, können sie als Einheit einfach gehandhabt werden.

Gemäß Anspruch 3 genügen jeweils vier symmetrisch aus dem Boden des Untersetzers und aus dem Boden des Blumenkastens ausgeformte paarweise ineinander passende, unten offene hohle Erhebungen, um ein einfaches Zusammensetzen des Blumenkastens mit dem Untersetzer zu gestatten und dann diese beiden Teile in einer vorgegebenen Position zueinander festzulegen.

Die Verjüngungen der unten offenen Erhebungen nach oben gemäß Anspruch 4 ermöglichen ein unkompliziertes Einsetzen der beiden Gegenstände ineinander und in zusammengeschobener Position eine sichere Fixierung.

Die Erhebungen können vorzugsweise gemäß Anspruch 5 pyramidenstumpfförmig sein.

Bei dem Einsetzen eines Bewässerungszwischenbodens in den Blumenkasten brauchen die relativ niedrigen hohlen Erhebungen über dem Boden des Blumenkastens nicht zu stören. Aus dem Boden des Blumenkastens können gemäß Anspruch 6 sich nach oben erstreckende und unten offene Dome neben den unten offenen hohlen Erhebungen ausgeformt sein, und zwar höher als diese Erhebungen. Auf den Domen kann sich der Bewässerungszwischenboden abstützen.

Gegebenenfalls aus dem Bewässerungszwischenboden nach unten abgesenkte hohle Ansaugkegel und die aus dem Boden des Blumenkastens sich nach oben erstreckenden hohlen, unten offenen Dome können nach Anspruch 9 ein Bewässerungssystem bilden, in dem die Dome als Überlaufdome auch oben stellenweise offen sind. Die Ansaugkegel und die Dome stellen keine Beeinträchtigung der unten offenen Erhebungen dar, die im Boden des Blumenkastens zur Anbringung in einem Untersetzer vorgesehen sind. Hierzu enden die Ansaugkegel des in dem Blumenkasten eingesetzten Bewässerungszwischenbodens im Abstand oberhalb der unten offenen, hohlen Erhebungen in dem Boden, wenn sich der Bewässerungszwischenboden auf den Domen abstützt, die neben den unten offenen, hohlen Erhebungen aus dem Boden des Blumenkastens ausgeformt sind. In Gebrauch nimmt, wie nach dem Stand der Technik üblich, jeder Ansaugkegel, der mit Erde gefüllt ist, Wasser aus einem Wasservorrat zwischen dem Bewässerungszwischenboden und dem Boden des Blumenkastens auf, während überschüssiges Wasser des Wasservorrats durch die als Überlaufdome ausgebildeten Dome nach unten abfließen kann.

Ein Ausführungsbeispiel der Erfindung wird im folgenden anhand einer Zeichnung mit drei Figuren beschrieben, woraus sich weitere vorteilhafte Merkmale der Erfindung ergeben können. Hierin zeigen:
- Figur 1: einen Querschnitt durch den Blumenkasten mit Untersetzer und eingesetzten Bewässerungszwischenboden sowie mit einem Blumenkastenhalter,
- Figur 2: den Blumenkasten mit Untersetzer, jedoch ohne Bewässerungszwischenboden in einer Seitenansicht und
- Figur 3: den Blumenkastenhalter in einer schaubildlichen Ansicht.

Die drei Figuren können hinsichtlich des Abbildungsmaßstabs voneinander abweichen.

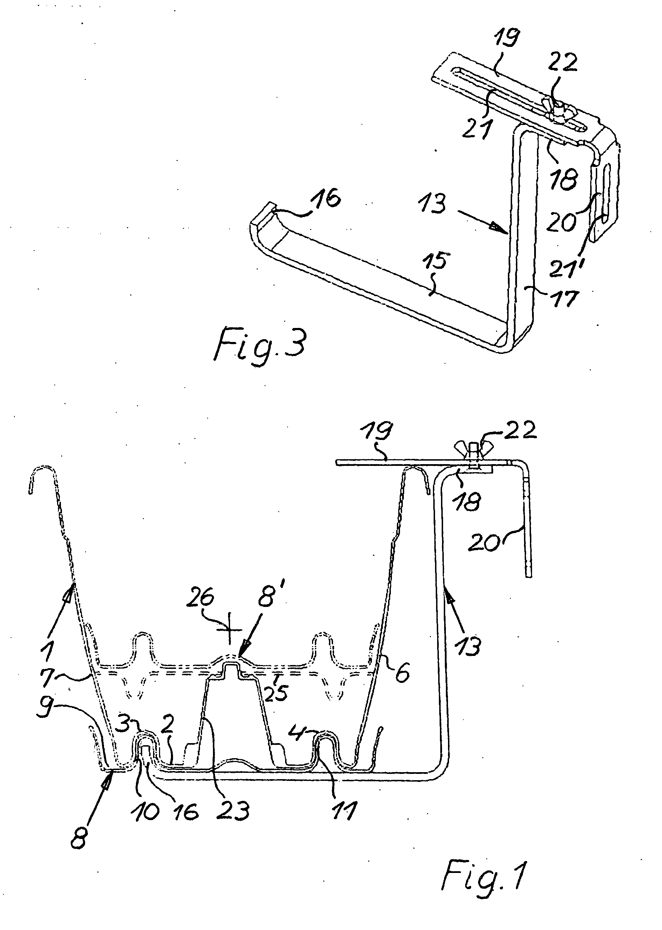

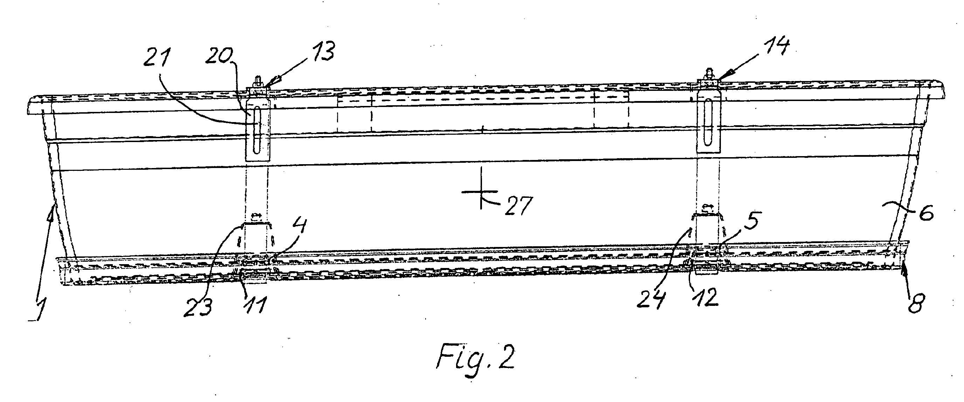

In den Figuren 1 und 2 ist mit 1 ein Blumenkasten aus Kunststoff bezeichnet, von dessen Boden 2 sich vier annähernd pyramidenstumpfförmige, hohle Erhebungen sich nach oben verjüngend erstrecken, von denen in den Figuren 1 und 2 die Erhebungen mit 3-5 bezeichnet sind. In der Figur 2 sind die Erhebungen durch eine Rückseite 6 des Blumenkastens verdeckt und daher mit unterbrochenen Linien dargestellt. Die Vorderseite des Blumenkastens trägt das Bezugszeichen 7, siehe Figur 1.

Der Blumenkasten wird von einem Untersetzer 8 aufgenommen, von dessen Boden 9 sich vier hohle, annähernd pyramidenstumpfförmige Erhebungen 10-12 nach oben verjüngend erstrecken, und zwar so, daß sie formschlüssig und kraftschlüssig zusammenclipsbar in die Erhebungen 3-5 des Blumenkastens passen. Zum einfachen Einpassen des Blumenkastens 1 in den Untersetzer 8 sind die Erhebungen, von denen die Erhebungen 3-5, 10-12 in den Figuren 1 und 2 erkennbar sind, symmetrisch zu der mittleren Längsachse 26 und mit anderen Abständen symmetrisch zu der mittleren Querachse 27 des Blumenkastens angeordnet.

Zur Anbringung des Blumenkastens mit Untersetzer an einem in der Zeichnung nicht dargestellten Geländer oder länglichen Element neben einer Wand oder aber direkt an der Wand dienen zwei leistenförmige Blumenkastenhalter 13 und 14, die gleich ausgebildet sind. Ein solcher Blumenkastenhalter ist in Figur 3 für sich dargestellt. Er umfaßt ein erstes Teil, bestehend aus einem in der Gebrauchslage waagerechten Steg 15, von dessen einem Ende ein erster, kurzer Endabschnitt 16 nach oben abgewinkelt ist, dem gegenüber im Abstand des Stegs ein zweiter Abschnitt 1 7 nach oben abgebogen ist, der am Ende 18 wiederum waagerecht verläuft. Ein zweites Teil des Blumenkastenhalters 13 besteht aus einem Winkelstück mit einem in Gebrauchslage waagerechten Abschnitt 19 und einem nach unten abgebogenen Endabschnitt 20. Der waagerechte Abschnitt 19 mit einem Langloch 21 ist gegenüber dem Ende 18 des ersten Abschnitts einstellbar und mit einer Flügelmutter 22 fixierbar, um ein Geländer oder ein anderes längliches Element einzuklemmen. Statt dessen kann der Blumenkastenhalter 13 aber auch mit einem durch ein weiteres Langloch 21' in den nach unten abgebogenen Endabschnitt 20 hindurchreichenden Befestigungselement direkt an einer Wand angebracht werden.

Wesentlich ist in jedem Befestigungsfall, daß der erste, relativ kurze abgewinkelte Endabschnitt 16 des Blumenkastenhalters 13, wie aus Figur 1 ersichtlich, in die ineinandergesteckten Erhebungen 3 und 10 hineinreicht, also von der Vorderseite 7 des Blumenkastens her gesehen verdeckt ist. Somit befindet sich der Endabschnitt geschützt in den Erhebungen 10 und 13.

Unbeschadet der Erhebungen an dem Boden des Blumenkastens kann auf die ebenfalls aus dem Boden ausgeformten, sich nach oben erstreckenden, unten offenen Dome 23, 24 ein Bewässerungszwischenboden 25 aufgesetzt werden. Die als Überlaufdome ausgebildeten Dome 23, 24 sind auch oben stellenweise offen, um überschüssiges Wasser nach unten abfließen zu lassen.

Der Bewässerungszwischenboden kann gelocht sein.

Aus der Zeichnung nicht zu ersehen ist, daß aus dem Bewässerungszwischenboden 25 sich nach unten erstreckende, hohle Ansaugkegel ausgeformt sein können, die oben an dem Bewässerungszwischenboden offen sind. Demzufolge können sie Erde von dem Bewässerungszwischenboden aufnehmen, so daß die Erde Wasser aus dem Zwischenraum zwischen dem Bewässerungszwischenboden 25 und dem Boden 2 des Blumenkastens ansaugt.

Aus Figur 1 ist ersichtlich, wie vor dem bestimmungsgemäßen Gebrauch des Blumenkastens in diesen der Untersetzer 8' eingelegt werden kann, um mit dem Blumenkasten eine leicht handhabbare und verkaufbare Einheit zu bilden. In diesem Fall brauchen der Untersetzer und der Blumenkasten nicht zusammengeclipst zu werden.

### Bezugszeichenliste

- 1: Blumenkasten
- 2: Boden
- 3: Erhebung
- 4: Erhebung
- 5: Erhebung
- 6: Rückseite
- 7: Vorderseite
- 8, 8': Untersetzer
- 9: Boden
- 10: Erhebung
- 11: Erhebung
- 12: Erhebung
- 13: Blumenkastenhalter
- 14: Blumenkastenhalter
- 15: Steg
- 16: erster Endabschnitt
- 17: zweiter Abschnitt
- 18: Ende
- 19: waagerechter Abschnitt
- 20: nach unten abgebogener Endabschnitt
- 21, 21': Langloch
- 22: Flügelmutter
- 23: Dom
- 24: Dom
- 25: Bewässerungszwischenboden
- 26: mittlere Längsachse
- 27: mittlere Querachse
- 28: Ansaugkegel
- 29: Ansaugkegel

## Patentansprüche

1. Blumenkasten mit Untersetzer, insbesondere aus Kunststoff, und mit mindestens einem leistenförmigen Blumenkastenhalter (13, 14), wobei aus einem Boden (2) des Blumenkastens (1) und aus einem Boden (9) des Untersetzers (8) jeweils hohle Formelemente ausgeformt sind, wobei die hohlen Formelemente unten offene Erhebungen (3-5, 10-12) sind, die ineinander passen, um den Blumenkasten in dem Untersetzer lösbar aufzunehmen,
wobei jeweils wenigstens zwei der unten offenen Erhebungen (3-5; 10-12) im Längsabstand zueinander in dem Boden (9) des Untersetzers (8) bzw. in dem Boden (2) des Blumenkastens (1) angeordnet sind, und
wobei die unten offenen Erhebungen (3-5, 10-12) auch im eingesetzten Zustand des Blumenkastens (1) in den Untersetzer (8) geeignet sind, jeweils einen ersten Endabschnitt (16) des leistenförmigen Blumenkastenhalters (13, 14) aufzunehmen,
**dadurch gekennzeichnet,**
**dass** der Blumenkastenhalter (13, 14) einen Steg (15) umfasst, von dem der erste Endabschnitt (16) und im Abstand zu diesem ein weiterer Abschnitt (17) abgewinkelt sind,
**dass** der weitere Abschnitt (17) länger als der erste Endabschnitt (16) ist und an dem von dem Steg (15) entfernten Ende (18) Haltemittel aufweist, die geeignet sind, den Untersetzer (8) mit dem Blumenkasten (1) insbesondere auf einem Geländer oder dergleichen länglichen Element neben einer Wand zu halten.

2. Blumenkasten mit Untersetzer nach Anspruch 1,
**dadurch gekennzeichnet,**
**daß** der Blumenkasten (1) und der Untersetzer (8) an den unten offenen Erhebungen (3-5; 10-12) zusammenclipsbar sind.

3. Blumenkasten mit Untersetzer nach wenigstens einem der Ansprüche 1 oder 2,
**dadurch gekennzeichnet,**
**daß** aus dem Boden (2) des Blumenkastens (1) und aus dem Boden (9) des Untersetzers (8) jeweils vier paarweise ineinander passende, unten offene Erhebungen (3-5, 10-12) ausgeformt sind, die symmetrisch zu einer mittleren Querachse (27) des Untersetzers und des Blumenkastens sowie symmetrisch zu deren mittlerer Längsachse (26) angeordnet sind.

4. Blumenkasten mit Untersetzer nach wenigstens einem der Ansprüche 1 bis 3,
**dadurch gekennzeichnet,**
**daß** sich die ineinander passenden, unten offenen Erhebungen (3-5, 10-12) nach oben verjüngen.

5. Blumenkasten mit Untersetzer nach Anspruch 4,
**dadurch gekennzeichnet,**
**daß** die ineinander passenden, unten offenen Erhebungen (3-5, 10-12) annähernd pyramidenstumpfförmig sind.

6. Blumenkasten mit Untersetzer nach wenigstens einem der vorangehenden Ansprüche,
**dadurch gekennzeichnet,**
**daß** in den Blumenkasten (1) ein Bewässerungszwischenboden (25) einsetzbar ist, der sich im eingesetzten Zustand über dem Boden (2) des Blumenkastens (1) und dessen unten offenen Erhebungen (3-5) befindet.

7. Blumenkasten nach Anspruch 6,
**dadurch gekennzeichnet,**
**daß** sich der Bewässerungszwischenboden (25) auf zentralen hohlen Domen (23, 24) abstützt, die aus dem Boden (2) des Blumenkastens (1) sich nach oben erstreckend und unten offen neben den unten offenen hohlen Erhebungen (3, 5) ausgeformt sind.

8. Blumenkasten mit Untersetzer nach Anspruch 7,
**dadurch gekennzeichnet;**
**daß** aus dem Bewässerungszwischenboden (25) des Blumenkastens (1) sich nach unten erstreckende, hohle, oben sowie seitlich offene Ansaugkegel ausgeformt sind und daß die unten offenen hohlen Dome (23, 24) als Überlaufdome auch oben teilweise offen sind.

## Claims

1. Planter box with saucer, especially in plastic, and having at least one strip-shaped planter box holder (13, 14), wherein in a bottom (2) of the planter box (1) and in a bottom (9) of the saucer (8) hollow profile elements are formed, wherein the hollow profile elements constitute elevations (3 - 5; 10 -, 12) open at the base which fit into each other to detachably lodge the planter box in the saucer,
wherein at least two of the elevations each (3 - 5; 10 - 12) open at the base are arranged longitudinally spaced relative to each other in the bottom (9) of the saucer (8) or in the bottom (2) of the planter box(1), respectively, and
wherein the elevations (3 - 5; 10 - 12) open at the base, even if the planter box (1) is inserted in the saucer (8), are suited to lodge a first end section (16) of the strip-shaped planter box holder (13, 14),
**characterized in**
**that** the planter box holder (13, 14) comprises an arm (15) the first end section (16) of which and, spaced relative thereto, a further section (17) are of angle-shaped form,
**that** the further section (17) is longer than the first end section (16) and includes at the end (18) remote from arm (15) holding means which are suited to hold the saucer (8) with the planter box (1) particularly on a railing or a similar oblong element next to a wall.

2. Planter box with saucer according to claim 1,
**characterized in**
**that** the planter box (1) and the saucer (8) can be clipped together at the elevations (3 - 5; 10 - 12) open at the base.

3. Planter box with saucer according to at least one of claims 1 or 2,
**characterized in**
**that** in the bottom (2) of the planter box (1) and in the bottom (9) of the saucer (8) four elevations (3 - 5; 10 - 12) open at the base each, pair-wisely fitting into each other, are formed symmetrically relative to a central lateral axis (27) of the saucer and of the planter box and symmetrically relative to their central longitudinal axis (26).

4. Planter box with saucer according to at least one of claims 1 to 3,
**characterized in**
**that** the elevations (3 - 5; 10 - 12) open at the base and fitting into each other are tapering upward.

5. Planter box with saucer according to claim 4,
**characterized in**
**that** the elevations (3 - 5; 10 - 12) open at the base are approximately truncated pyramid shaped.

6. Planter box with saucer according to at least one of the foregoing claims,
**characterized in**
**that** into the planter box (1) an irrigation intermediate bottom (25) can be inserted which when inserted is disposed above the bottom (2) of the planter box (1) and its elevations (3 - 5) open at the base

7. Planter box with saucer according to claim 6,
**characterized in**
**that** the irrigation intermediate bottom (25) is supported on central hollow domes (23, 24) which, extending from the bottom (2) of the planter box (1) and open at the base, are molded out aside of the hollow elevations (3, 5) open at the base.

8. Planter box with saucer according to claim 7,
**characterized in**
**that** from the irrigation intermediate bottom (25) of the planter box (1), downwardly extending hollow suction sockets open on top and on the sides are molded out and that the hollow domes (23, 24) open at the base are also partly open on top serving as overflow domes.

## Revendications

1. Jardinière avec soucoupe, notamment en plastique, et avec au moins un support de jardinière sous forme de baguette (13, 14), des éléments creux de formage étant formés chacun à partir d'un fond (2) de la jardinière (1) et d'un fond (9) de la soucoupe (8), les éléments creux de formage étant des saillies ouvertes en bas (3-5, 10-12), qui s'emboîtent l'une dans l'autre pour recevoir la jardinière dans la soucoupe d'une manière amovible,
au moins deux chacun des saillies ouvertes en bas (3-5; 10-12) étant agencées espacées longitudinalement l'une de l'autre dans le fond (9) de la soucoupe (8) et/ou dans le fond (2) de la jardinière (1), et
les saillies ouvertes en bas (3-5; 10-12) étant adapté pour recevoir chacune une première section terminale (16) du support de jardinière sous forme de baguette (13, 14) aussi lorsque la jardinière (1) est placée dans la soucoupe (8),
**caractérisé en ce**
**que** le support de jardinière (13, 14) comprend une âme (15) de laquelle la première section terminale (16) et dans une première distance de celle-ci une autre section (17) sont pliées,
**que** l'autre section (17) est plus longue que la première section terminale (16) et comprend des moyens de maintien à l'extrémité (18) à distance de l'âme (15) qui sont adaptés pour maintenir la soucoupe (8) avec la jardinière (1) surtout sur une balustrade ou un élément oblong similaire à proximité d'un mur.

2. Jardinière avec soucoupe selon la revendication 1,
**caractérisé en ce**
**que** la jardinière (1) et la soucoupe (8) pouvant être clipsée l'une à l'autre aux saillies ouvertes en bas (3-5; 10-12).

3. Jardinière avec soucoupe selon au moins l'une des revendications 1 ou 2,
**caractérisé en ce**
**que** quatre saillies ouvertes en bas (3-5; 10-12) chacun qui s'emboîtent l'une dans l'autre par paires sont formées du fond (2) de la jardinière (1) et du fond (9) de la soucoupe (8) qui sont agencées symétriquement à un axe transversal médian (27) de la soucoupe et de la jardinière (1) ainsi que symétriquement à son axe longitudinal médian.

4. Jardinière avec soucoupe selon au moins l'une des revendications 1 à 3,
**caractérisé en ce**
**que** les saillies ouvertes en bas (3-5; 10-12) s'emboîtant l'une dans l'autre se rétrécissent vers le haut.

5. Jardinière avec soucoupe selon la revendication 4,
**caractérisé en ce**
**que** les saillies ouvertes en bas (3-5; 10-12) s'emboîtant l'une dans l'autre sont environ sous forme de pyramide tronquée.

6. Jardinière avec soucoupe selon au moins l'une des revendications précédentes,
**caractérisé en ce**
**qu'**un plancher intermédiaire d'irrigation (25) peut être placé dans la jardinière (1) qui à l'état monté se trouve au-dessus du fond (2) de la jardinière (1) et ses saillies ouvertes en bas (3-5).

7. Jardinière avec soucoupe selon la revendication 6,
**caractérisé en ce**
le plancher intermédiaire d'irrigation (25) repose sur des dômes creux centraux (23, 24) qui sont formés en s'étendant vers le haut à partir du fond (2) de la jardinière (1) et ouverts en bas à côté des saillies creux ouvertes en bas (3-5).

8. Jardinière avec soucoupe selon la revendication 7,
**caractérisé en ce**
des cônes d'aspiration creux s'étendant du plancher intermédiaire d'irrigation (25) vers le bas et ouverts latéralement et vers le haut sont formés, et que les dômes creux ouverts vers le bas (23, 24) sont partiellement ouverts aussi vers le haut en tant que dômes de trop-plein.
